# EUROPEAN PATENT SPECIFICATION

(11) **EP 3 660 327 B1**
(45) Date of publication and mention of the grant of the patent: **15.05.2024**
(21) Application number: 18838498.6
(22) Date of filing: 25.07.2018
(51) Int. Cl.: F04D 29/44, B60H 1/00, B60H 3/06, F04D 29/28, F04D 29/70, F04D 29/42

(54) **CENTRIFUGAL FAN**
ZENTRIFUGALGEBLÄSE
VENTILATEUR CENTRIFUGE

(30) Priority: 28.07.2017 JP 2017146679; 21.05.2018 JP 2018097283
(43) Date of publication of application: 03.06.2020
(73) Proprietor: Valeo Japan Co., Ltd., Saitama 360-0193 (JP)
(72) Inventor: YOSHIZAKI, Hisayoshi, Kumagaya-shi Saitama 360-0193 (JP); ARAKI, Daisuke, Kumagaya-shi Saitama 360-0193 (JP); HAYASHI, Naoto, Kumagaya-shi Saitama 360-0193 (JP)
(74) Representative: Valeo Systèmes Thermiques
(86) International application number: PCT/JP2018/027834
(87) International publication number: WO 2019/022115

(56) References cited:
- WO-A1-2016/133014
- WO-A1-2017/103358
- WO-A1-2018/074339
- DE-A1- 19 963 796
- DE-A1-102009 009 912
- JP-A- 2000 203 235
- JP-A- 2003 301 794
- JP-A- 2017 505 397
- KR-A- 20070 066 176
- KR-B1- 100 683 566
- KR-B1- 100 739 467
- KR-B1- 101 199 795
- US-A1- 2012 214 394

## Description

### Technical Field

The present invention relates to a centrifugal blower designed for a two-layer flow air conditioning system for a vehicle.

### Background Art

An example of a centrifugal blower suitable for a two-layer flow air conditioning system for a vehicle is described in JP 2000-203235.

This centrifugal blower has: a scroll housing that has an upper passage and a lower passage which are separated from each other; and a separation cylinder that is inserted in the scroll housing. When the two-layer flow air conditioning system operates in an internal/external air two-layer flow mode, internal air and external air are sucked into an air intake housing at the same time through an internal air suction port and an external air suction port respectively by adjusting the position of an internal/external air switching door. External air passes through the outside of the separation cylinder and then blows out into the upper passage of the scroll housing through an upper half part of an impeller, and internal air passes through the inside of the separation cylinder and then blows out into the lower passage of the scroll housing through a lower half part of the impeller. In this way, this centrifugal blower intends to prevent, as much as possible, internal air and external air from mixing with each other after the internal air and external air are sucked into the air intake housing until they blow out from the scroll housing when the air conditioning system operates in the internal/external air two-layer flow mode.

However, in the centrifugal blower disclosed in JP 2000-203235, the mainstream of external air having been sucked into the air intake housing from the front of the vehicle in a rearward direction passes through a space outside the separation cylinder in a downward direction and then its direction is changed toward the front of the vehicle by the separation cylinder. Such a large change in the flow direction of the mainstream of external air increases the air-flow resistance against external air, which could result in a decrease in the flow volume of external air to be sucked into the air intake housing through the external air suction port. If the centrifugal blower fails to suck external air enough during the internal/external air two-layer flow mode, internal air having been sucked with enough flow volume could penetrate the upper passage for external air when the internal air blows out into the lower passage of the scroll housing from the impeller, for example. This hampers the centrifugal blower from sufficiently preventing fog on windows during heating which is a main purpose of employing the internal/external air two-layer flow mode.

### Citation List

### Patent Literature

Japanese Patent Application Publication No. 2000-203235 KR100683566, and DE19963796 also relate to centrifugal layers for a two layer mode.

### Summary of Invention

### Technical Problem

The present invention aims to provide a centrifugal blower capable of reducing the air-flow resistance against external air from an external air introduction port of an air intake housing to a scroll housing when the centrifugal blower operates in an internal/external air two-layer flow mode.

### Solution to Problem

The invention relates to a centrifugal blower as defined in claims 1 and 8 and their respective dependent claims. Advantageous Effects of Invention

According to the present invention, it is possible to reduce the degree of change of direction of external air at least in a section between the external air introduction port of the air intake housing and the suction port of the scroll housing, and thereby reduce the air-flow resistance in the above section.

### Brief Description of Drawings

[Fig. 1] Fig. 1 is a meridional sectional view of a centrifugal blower according to an embodiment (first embodiment) of the present invention, and is a meridional sectional view obtained by cutting the centrifugal blower along a vertical plane that extends in a longitudinal direction and passes through a rotational axis line.
[Fig. 2] Fig. 2 is a sectional view taken along the line II-II of Figs. 1, 4, and 5.
[Fig. 3] Fig. 3 is a sectional view taken along the line III-III of Figs. 1, 4, and 5.
[Fig. 4] Fig. 4 is a meridional sectional view of a centrifugal blower according to another embodiment (second embodiment) of the present invention, and is a meridional sectional view obtained by cutting the centrifugal blower along the vertical plane that is the same as in Fig. 1.
[Fig. 5] Fig. 5 is a meridional sectional view of a centrifugal blower according to still another embodiment (third embodiment) of the present invention, and is a meridional sectional view obtained by cutting the centrifugal blower along the vertical plane that is the same as in Fig. 1.
[Fig. 6A] Fig. 6A is a sectional view of an upper portion of the centrifugal blower for explaining the positional relationship between switching doors in the second embodiment.
[Fig. 6B] Fig. 6B is a perspective view of the upper portion of the centrifugal blower for explaining the positional relationship between the switching doors in the second embodiment.
[Fig. 7A] Fig. 7A is a sectional view of an upper portion of a centrifugal blower for explaining the positional relationship between switching doors in a modification example of the second embodiment.
[Fig. 7B] Fig. 7B is a perspective view of the upper portion of the centrifugal blower for explaining the positional relationship between the switching doors in the modification example of the second embodiment.
[Fig. 8A] Fig. 8A is a sectional view of an upper portion of a centrifugal blower for explaining the positional relationship between switching doors in a fourth embodiment not being part of the invention.
[Fig. 8B] Fig. 8B is a schematic perspective view of the centrifugal blower according to the fourth embodiment.
[Fig. 8C] Fig. 8C is a sectional view of an upper portion of a centrifugal blower for explaining the positional relationship between switching doors in a modification example of the fourth embodiment.

### Description of Embodiments

Hereinbelow, embodiments of a centrifugal blower for a vehicle according to the present invention are described with reference to the accompanying drawings. In each drawing, reference character "R" indicates the right side of the vehicle, reference character "L" indicates the left side of the vehicle, reference character "Fr" indicates the front side of the vehicle, reference character "Rr" indicates the rear side of the vehicle, reference character "U" indicates the upper side of the vehicle, and reference character "D" indicates the lower side of the vehicle, respectively. A centrifugal blower is often installed in a vehicle in the illustrated direction; however, the installation direction of a centrifugal blower is not limited to that in the illustrated example, and may incline relative to the illustrated direction to a certain degree, for example.

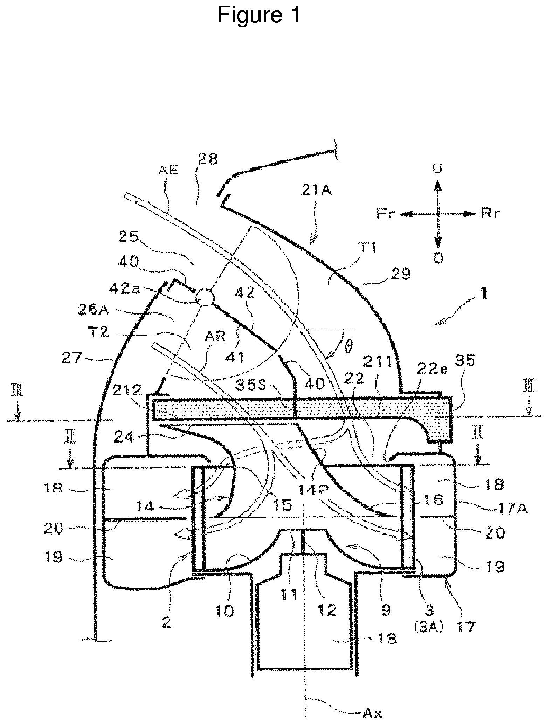

A centrifugal blower 1 illustrated in Fig. 1 is a single-suction centrifugal blower. The centrifugal blower 1 has an impeller 2. The impeller 2 has, in its outer circumferential portion, multiple blades 3 forming blade rows 3A arranged in its circumferential direction. The impeller 2 is driven to rotate about a rotational axis line Ax by a motor 13 to blow the air, sucked inside a radially inside space of the blade rows of the impeller 2 from an upper side in the axial direction thereof (one end side in the axial direction thereof), out toward the radially outside.

Note that, in this specification, for the sake of convenience of description, the direction of the rotational axis line Ax is referred to as an axial direction or an up-and-down direction, and upper and lower sides in Figs. 1, 4, and 5 are respectively referred to as an "axially upper side" and an "axially lower side". In addition, in this specification, unless otherwise noted, the direction of the radius of a circle which is drawn on a plane, orthogonal to the rotational axis line Ax, about any point on the rotational axis line Ax is referred to as a radial direction, and the circumferential direction of the circle is referred to as a circumferential direction.

The impeller 2 includes an internal deflection member 9 formed integrally with the impeller 2. The internal deflection member 9 is sometimes called a cone part. This internal deflection member 9 is a rotator in a geometrical sense, and has a side circumferential part 10 and a disk-shaped central part 11. In the central part 11, a rotating shaft 12 of the motor 13 is coupled to the impeller 2. In this example, the side circumferential part 10 curves in such a way that the profile line of the outer circumferential face of the side circumferential part 10 in a meridional section thereof inclines sharply toward the central part 11. In another example of the side circumferential part 10 (not illustrated), there is also a case where the profile line of the outer circumferential face of the side circumferential part 10 in the meridional section thereof does not curve from the central part 11 toward the blade rows 3A (has a linear cross section) .

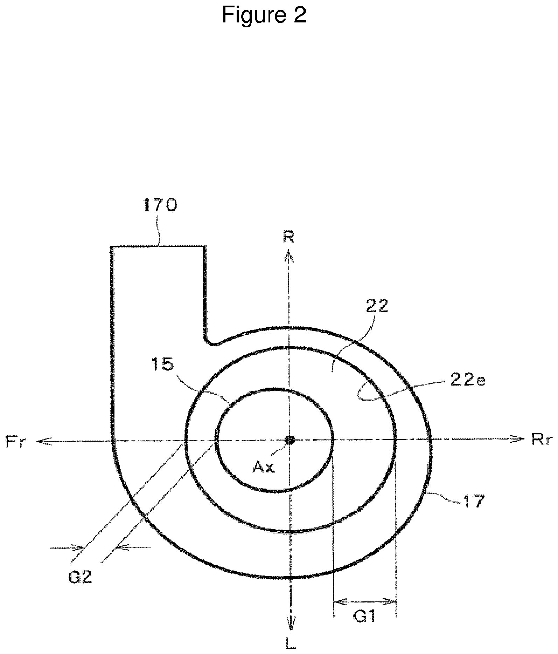

The impeller 2 is housed in an internal space of a scroll housing 17. The scroll housing 17 has a suction port 22 that opens on the axially upper side and a discharge port 170 (see Fig. 2). As illustrated in Fig. 2, when the scroll housing 17 is seen in the axial direction, the discharge port 170 extends substantially in the direction of tangent to the outer circumferential face of the scroll housing 17. The discharge port 170 cannot be seen in Fig. 1.

The scroll housing 17 has a partition wall 20 that extends radially inward from an outer circumferential wall 17A of the scroll housing 17. The partition wall 20 divides a region of the inside space of the scroll housing 17, located between the inner circumferential face of the scroll housing 17 and the outer circumferential face of the impeller 2, in the axial direction (in the up-and-down direction) to form a first airflow channel 18 on the upper side and a second airflow channel 19 on the lower side that extend in the circumferential direction along the outer circumferential wall 17A of the scroll housing 17.

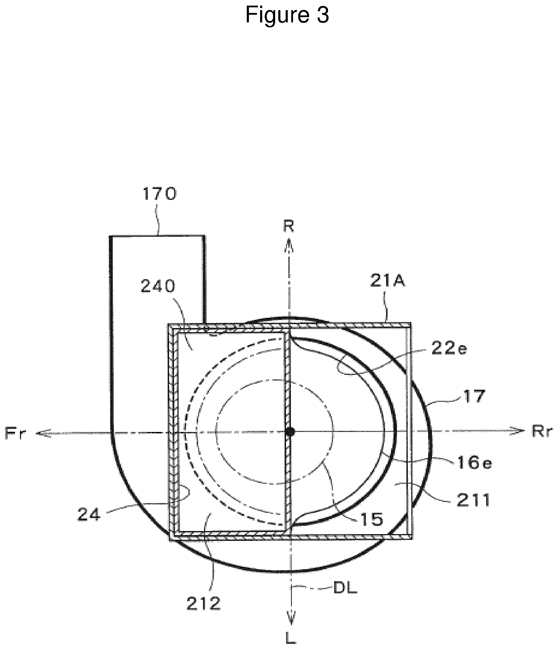

A separation cylinder 14 is inserted in the scroll housing 17 via the suction port 22. As can be seen in Fig. 3, the cross section (i.e. the cross section orthogonal to the rotational axis line Ax) of an upper end part 24 (inlet side end part) of the separation cylinder 14 is substantially rectangular. As can be seen in Fig. 2, the cross section of a central part 15 of the separation cylinder 14 is circular (or substantially circular). The shape of the cross section of the separation cylinder 14 shifts smoothly from rectangular to circular form as it extends from the upper end part 24 closer to the central part 15. The shape of the cross section of the separation cylinder 14 in a region from the central part 15 to a lower part 16 is circular (or substantially circular), and the radius of the circle increases gradually as the separation cylinder extends closer to the lower part 16. In other words, the lower part 16 of the separation cylinder 14 has a flare shape that increases in diameter as it extends closer to its lower end. The position of the center of the cross section of the separation cylinder 14 shifts smoothly as it extends from the upper end part 24 to the lower part 16 (outlet side end part), and this center is located on the rotational axis line Ax at the lowest end (outlet side end part) of the lower part 16.

The region from the central part 15 to the lower part 16 of the separation cylinder 14 passes through a space of the suction port 22 on the radially inside thereof and extends to an inside space of the impeller 2. The upper end part 24 of the separation cylinder 14 is located outside the scroll housing 17 (axially above the suction port 22) . The lower end of the separation cylinder 14 is located in the vicinity of the blades 3 of the impeller 2 at substantially the same axial height position as the partition wall 20 of the scroll housing 17.

It is impossible or extremely hard to integrally mold the separation cylinder 14 having the illustrated shape by the resin injection molding technique. Accordingly, it is preferable to manufacture the separation cylinder 14 by coupling two or more separately injection molded pieces by a method such as bonding or fitting.

The separation cylinder 14 divides the flow of the air, sucked inside the scroll housing 17, into a first airflow to pass through the outside of the separation cylinder 14 and a second airflow to pass through the inside of the separation cylinder 14. The first airflow passes through a ring-shaped region of the suction port 22 of the scroll housing 17 that is located outside the outer circumferential face of the separation cylinder 14, and flows into an upper half part of the blade rows of the impeller 2 (a portion close to the suction port 22). The second airflow enters inside the separation cylinder 14 through the upper end of the separation cylinder 14 and flows into a lower half part of the blade rows of the impeller 2 (a portion far from the suction port 22). Accordingly, the ring-shaped region of the suction port 22 of the scroll housing 17 that is located outside the outer circumferential face of the separation cylinder 14 can be deemed as a first suction port of the scroll housing 17, and the opening at the upper end of the separation cylinder 14 can be deemed as a second suction port of the scroll housing 17.

An air intake housing 21A is coupled to the scroll housing 17. The scroll housing 17 and the air intake housing 21A may be molded integrally, or may be manufactured separately and coupled together by a method such as screwing, bonding, or fitting. The scroll housing 17 and the air intake housing 21 constitute a part of an air conditioning system casing.

The air intake housing 21A has an external air introduction port 25 and an internal air introduction port (first internal air introduction port) 26A. The external air introduction port 25 and the internal air introduction port 26A both open substantially toward the front. The external air introduction port 25 is located above the internal air introduction port 26A.

The external air introduction port 25 is coupled to, or located near, an outlet port 28 of an external air introduction passage that is provided in a vehicle division wall 27 partitioning an engine room and a vehicle compartment of the vehicle. Thereby, external air AE (air taken in from the outside of the vehicle) can be introduced into the air intake housing 21A through the external air introduction port 25.

The internal air introduction passage 26A opens toward a space inside the vehicle compartment that is partitioned from the engine room by the vehicle division wall 27. Thereby, internal air AR (in-vehicle air) can be introduced into the air intake housing 21A through the internal air introduction port 26A.

Fig. 3 illustrates the cross section (the cross section orthogonal to the rotational axis line Ax) of the air intake housing 21A including the upper end (inlet side end part) of the separation cylinder 14. This cross section can be divided into a front region 212 (second region) and a rear region 211 (first region) by a virtual division line DL. When seen from the axially upper side, the front region 212 substantially coincides with an opening region 240 that is surrounded by the end edge of the upper end part 24 of the separation cylinder 14. The rear region 211 is a region, of the cross section of the air intake housing 21A described above, located behind the opening region 240.

The area ratio between the front region 212 and the rear region 211 can be set at 5:5. However, the area of the rear region 211 may be set larger than that of the front region 212 for facilitating introduction of external air AE.

As illustrated in Fig. 1, a housing division wall 40 is provided inside the air intake housing 21A. By this housing division wall 40, a first passage T1, which connects the external air introduction port 25 and the rear region 211 (see also Fig. 3) to each other, and a second passage T2, which connects the internal air introduction port 26A and the front region 212 to each other, are separated from each other. The first passage T1 and the second passage T2 each have a substantially rectangular cross section that has a long side extending in a lateral direction and a short side orthogonal to the long side. The first passage T1 (and also the second passage T2) extends from the substantially rectangular external air introduction port 25 (internal air introduction port 26A) to the rear region 211 (front region 212) while keeping, or varying, the length ratio between the long side and the short side of the rear region 211 (front region 212) in Fig. 3.

When the centrifugal blower operates in a two-layer flow mode, the first passage T1 becomes an airflow channel in which external air AE flows, and the second passage T2 becomes an airflow channel in which internal air AR flows. When seen in the cross section of Fig. 1, the airflow channel of external air AE extending from the external air introduction port 25 to the rear region 211 extends obliquely downward and rearward as it extends downstream from the external air introduction port 25, and extends above and behind the airflow channel of internal air AR extending from the internal air introduction port 26A to the second region 212.

When seen in the cross section of Fig. 1, a rear wall 29 of the air intake housing 21A curves to be convex upward and rearward. For this reason, an oblique angle **θ** (see Fig. 1) of the airflow channel of external air AE, extending from the external air introduction port 25 to the rear region 211, with respect to the horizontal plane increases gradually toward the downstream. In other words, the direction in which external air AE flows changes gradually toward the downstream, and therefore no drastic change of direction of external air AE occurs. To put it another way, an increase in air-flow resistance against external air AE due to the change of direction is extremely small, which makes it possible to introduce a sufficient volume of external air AE into the scroll housing 17 especially during the two-layer flow mode.

An opening 41 is formed in the housing division wall 40. This opening 41 is provided with a first switching door 42 that is driven by an actuator (not illustrated) to pivot about a pivot shaft 42a extending in the lateral direction. Fig. 1 illustrates a state where the first switching door 42 is located at a neutral position (two-layer flow mode position) for operating the centrifugal blower in the two-layer flow mode. As described previously, when the first switching door 42 is located at the neutral position, the external air introduction port 25 communicates with the rear region 211 of Fig. 3 and the external air introduction port 25 does not communicate with the front region 212, and the internal air introduction port 26A communicates with the front region 212 of Fig. 3 and the internal air introduction port 26A does not communicate with the rear region 211.

When the centrifugal blower operates in the two-layer flow mode, external air AE having flowed into the rear region 211 (see also Fig. 3) flows into the scroll housing 17 while passing through the outside of the separation cylinder 14, and then passes through an upper half part of the impeller 2 to blow out into the first airflow channel 18. Note that, at this time, the external air AE having passed through the rear region 211 mainly flows toward a rear region of the suction port 22 of the scroll housing 17 (see Fig. 1), and therefore the external air AE mostly flows into the scroll housing 17 through the rear region of the suction port 22 of the scroll housing 17. However, a part of the external air AE goes around the separation cylinder 14 and flows to the front side to flow into the scroll housing 17 through a front region of the suction port 22.

On the other hand, internal air AR having flowed into the front region 212 of Fig. 3 flows into the scroll housing 17 while passing through the inside of the separation cylinder 14, and then passes through a lower half part of the impeller 2 to blow out into the second airflow channel 19.

Besides the neutral position described above, the first switching door 42 may take: an external air mode position (a position illustrated by a dashed line in Fig. 1 where the door turns clockwise by about 80 degrees from the neutral position and closes the internal air introduction port 26A) for operating the centrifugal blower in an external air mode; and an internal air mode position (a position illustrated by a dashed line in Fig. 1 where the door turns counterclockwise by about 100 degrees from the neutral position and closes the external air introduction port 25) for operating the centrifugal blower in an internal air mode.

At the external air mode position, the external air introduction port 25 communicates with the rear region 211 and the front region 212 of Fig. 3 whereas the internal air introduction port 26A does not communicate with the rear region 211 and the front region 212. At the internal air mode position, the internal air introduction port 26A communicates with the rear region 211 and the front region 212 of Fig. 3 whereas the external air introduction port 25 does not communicate with the rear region 211 and the front region 212.

As illustrated in Fig. 1, a filter 35 is provided near and above the upper end part 24 of the separation cylinder 14. When the filter 35 is seen from the upstream side in the airflow direction, the filter 35 covers the front region 212 and the rear region 211 in the cross section of Fig. 3 described above to remove contaminants, such as dust and particles, and odors contained in the air which are to pass through these regions.

The filter 35 preferably has a partition plate 35S that extends in parallel with the virtual division line DL described above. This partition plate 35S makes it possible to prevent or inhibit internal air and external air from mixing together near the center of the filter 35 when passing through the filter 35.

When seen in the cross section illustrated in Fig. 1, a rear contour 14P of the separation cylinder 14 extends from the upper end to the lower end so that it slopes rearward toward the bottom. Thereby, external air AE that flows from the vicinity of the upper end part 24 (inlet side end part) of the separation cylinder 14 into the scroll housing 17 smoothly and gradually changes its direction toward the radially outside of the impeller 2. This also helps smooth the flow of external air AE, which is advantageous in introducing a sufficient volume of external air AE into the scroll housing 17.

As illustrated in Fig. 2 that illustrates a cross section which is orthogonal to the axis line Ax and includes a circumferential edge 22e being an inner circumferential edge of the suction port 22, a rear clearance G1 between the circumferential edge 22e and an outer circumferential face of the separation cylinder 14 is larger than a front clearance G2 between them. When the centrifugal blower operates in the two-layer flow mode, a larger volume of external air AE flows into a rear portion of the suction port 22. As described above, by setting the rear clearance G1 larger than the other, it is possible to take in a larger volume of external air AE into the scroll housing 17.

According to the above embodiment (first embodiment), the various geometrical features of the components of the centrifugal blower described above make it possible to flow external air AE into the scroll housing 17 efficiently. Thus, it is possible to prevent or inhibit internal air AR from mixing with external air AE when the centrifugal blower operates in the two-layer flow mode, and thereby reliably prevent the window from being fogged up during heating, for example.

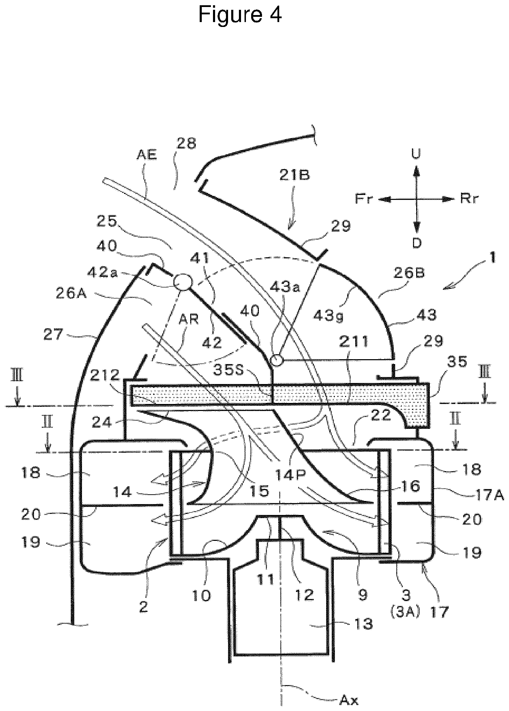

Next, another embodiment (second embodiment) is described with reference to Fig. 4. In Fig. 4, members which are the same as or similar to the members illustrated in Fig. 1 are assigned the same or similar reference signs and not described again here.

In the second embodiment of Fig. 4, an air intake housing 21B is provided instead of the air intake housing 21A. A second internal air introduction port 26B is formed in the rear wall 29 of the air intake housing 21B. This second internal air introduction port 26B is provided with a second switching door 43 that is driven by an actuator (not illustrated) to pivot about a pivot shaft 43a extending in the lateral direction.

The second switching door 43 is movable between: a position (first position) illustrated in Fig. 4 and; a position (second position) obtained by turning the second switching door counterclockwise by about 60 degrees from the position illustrated in Fig. 4. When the second switching door 43 is located at the first position, the external air introduction port 25 communicates with the rear region 211 and the second internal air introduction port 26B does not communicate with the rear region 211. When the second switching door 43 is located at the second position, the external air introduction port 25 does not communicate with the rear region 211 and the second internal air introduction port 26B communicates with the rear region 211.

In the second embodiment, the first switching door 42 is movable between: a first position (which corresponds to the neutral position in the first embodiment) where the first switching door opens a first internal air introduction port 26A and closes the opening 41 of the housing division wall 40; and a second position (which corresponds to the external air mode position in the first embodiment) where the first switching door closes the first internal air introduction port 26A and opens the opening 41 of the housing division wall 40. Unlike the first embodiment, the first switching door 42 of the second embodiment cannot be located at a position corresponding to the internal air mode position in the first embodiment.

In the second embodiment, when the centrifugal blower operates in the two-layer flow mode, the first switching door 42 is located at the first position while the second switching door 43 is located at the first position as illustrated in Fig. 4. In other words, in this mode, internal air AR introduced through the first internal air introduction port 26A flows into the front region 212 while external air AE introduced through the external air introduction port 25 flows into the rear region 211.

Meanwhile, when the centrifugal blower operates in the internal air mode, the first switching door 42 is located at the first position while the second switching door 43 is located at the second position. In other words, in this mode, internal air AR introduced through the first internal air introduction port 26A flows into the front region 212 while internal air AR introduced through the second internal air introduction port 26B flows into the rear region 211.

Meanwhile, when the centrifugal blower operates in the external air mode, the first switching door 42 is located at the second position while the second switching door 43 is located at the first position. In other words, in this mode, external air AE introduced through the external air introduction port 25 flows into the front region 212 and the rear region 211.

As seen in the cross section of Fig. 4, the second switching door 43 has an air guiding face 43g that curves to be convex upward and rearward when the door is located at the first position. When the second switching door 43 is located at the first position, as seen in the cross section of Fig. 4, the contour of a combination of the rear wall of the air intake housing 21B and the second switching door 43 is almost the same as the contour of the rear wall of the air intake housing 21A in the first embodiment. Accordingly, when the centrifugal blower operates in the two-layer flow mode, external air AE introduced through the external air introduction port 25 flows while smoothly changing its direction. This enables an increase in air-flow resistance against external air AE due to the change of direction to be suppressed to be extremely small, which makes it possible to introduce a sufficient volume of external air AE into the scroll housing 17 in the second embodiment as well as in the first embodiment.

The air guiding face 43g of the second switching door 43 has a shape corresponding to a part of the side face of a cylinder having the pivot shaft 43a as its central axis. To put it another way, the air guiding face 43g is a face disposed at a position spaced from the pivot shaft 43a by a predetermined clearance.

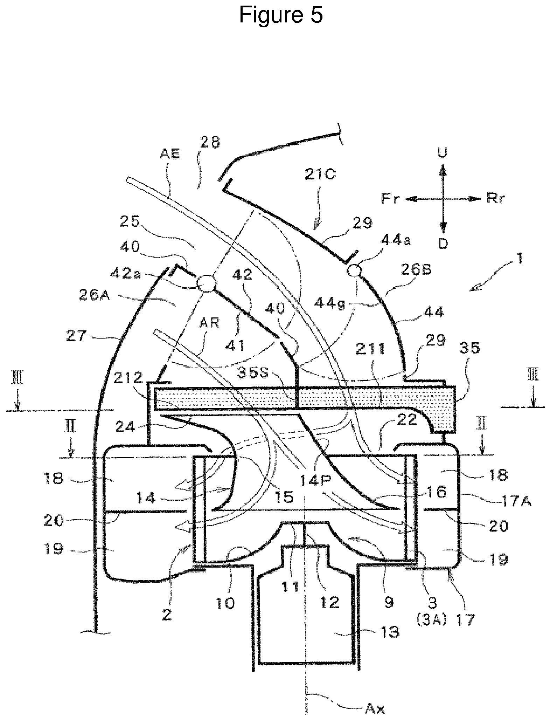

Next, still another embodiment (third embodiment) is described with reference to Fig. 5. In Fig. 5, members which are the same as or similar to the members illustrated in Fig. 1 are assigned the same or similar reference signs and not described again here.

In the third embodiment of Fig. 5, an air intake housing 21C is provided instead of the air intake housing 21A. The second internal air introduction port 26B as similar to that in the second embodiment is formed in the rear wall 29 of the air intake housing 21C. This second internal air introduction port 26B is provided with a second switching door 44 that is driven by an actuator (not illustrated) to pivot about a pivot shaft 44a extending in the lateral direction.

The second switching door 44 is movable between: a position (first position) illustrated in Fig. 5 and; a position (second position) obtained by turning the second switching door clockwise by about 50 degrees from the position illustrated in Fig. 5. When the second switching door 44 is located at the first position, the external air introduction port 25 communicates with the rear region 211 and the second internal air introduction port 26B does not communicate with the rear region 211. When the second switching door 44 is located at the second position, the external air introduction port 25 does not communicate with the rear region 211 and the second internal air introduction port 26B communicates with the rear region 211.

The first switching door 42 in the third embodiment has the same configuration as the first switching door 42 illustrated in Fig. 1, and can take the three positions of the two-layer flow mode position, the internal air mode position, and the external air mode position as similar to the first switching door 42 illustrated in Fig. 1.

In the third embodiment, when the centrifugal blower operates in the two-layer flow mode, the first switching door 42 is located at the neutral position while the second switching door 43 is located at the first position as illustrated in Fig. 5. In other words, in this mode, internal air AR introduced through the first internal air introduction port 26A flows into the front region 212 while external air AE introduced through the external air introduction port 25 flows into the rear region 211.

Meanwhile, when the centrifugal blower operates in the internal air mode, the first switching door 42 is located at the internal air mode position while the second switching door 43 is located at the second position. In other words, in this mode, internal air AR introduced through the first internal air introduction port 26A flows into the front region 212 while internal air AR introduced through the second internal air introduction port 26B flows into the rear region 211. Note that the first switching door 42 may be located at the neutral position.

Meanwhile, when the centrifugal blower operates in the external air mode, the first switching door 42 is located at the external air mode position while the second switching door 43 is located at the first position. In other words, in this mode, external air AE introduced through the external air introduction port 25 flows into the front region 212 and the rear region 211.

As seen in the cross section of Fig. 5, as similar to the second switching door 43 in the second embodiment, the second switching door 44 also has an air guiding face 44g that curves to be convex upward and rearward when the door is located at the first position. To put it another way, when the second switching door 44 is located at the first position, as seen in the cross section of Fig. 5, the contour of a combination of the rear wall of the air intake housing 21B and the second switching door 44 is almost the same as the contour of the rear wall of the air intake housing 21A in the first embodiment. Accordingly, the second switching door 44 has the same function as the second switching door 43.

The second and third embodiments described above can also achieve the same effect as the first embodiment. In addition, according to the second and third embodiments, since the second internal air introduction port 26B is provided in addition to the first internal air introduction port 26A, it is possible to take a sufficient volume of internal air into the scroll housing 17 through the rear region 211 during the internal air mode. Further, according to the second embodiment, since the first switching door 42 does not need to be located at the internal air mode position unlike in the first and third embodiments, it is possible to cause the first switching door 42 to reliably close the opening 41 of the housing division wall 40 when the door is located at the first position during the internal/external air two-layer flow mode. Thereby, it is possible to more reliably prevent internal air from mixing with external air during the internal/external air two-layer flow mode.

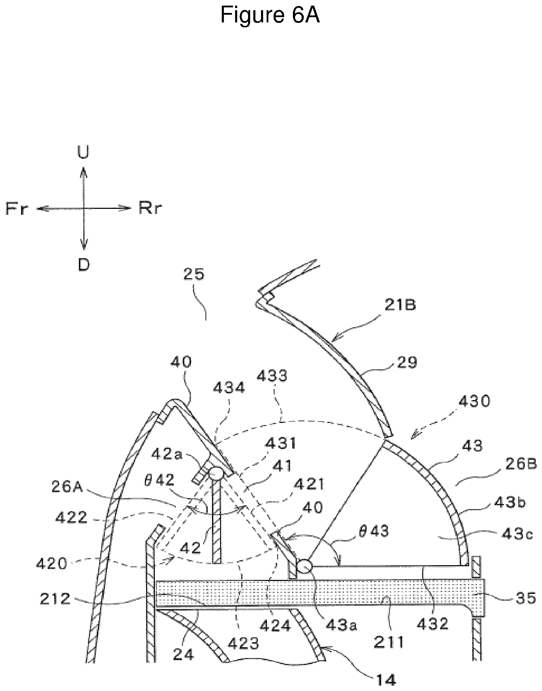

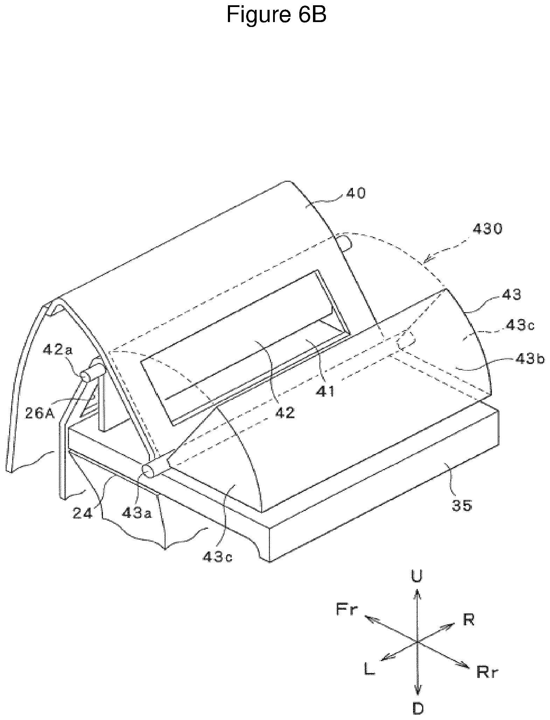

Next, with reference to Figs. 6A and 6B, a more detailed description is given of the first switching door 42 and the second switching door 43 in the second embodiment illustrated in Fig. 4, particularly their positional relationship. Fig. 6A is substantially the same as an upper half of Fig. 4 except that some reference signs are added thereto for the purpose of description.

The first switching door 42 is formed as a cantilever door. In this specification, the term "cantilever door" denotes a door that includes a wall body extending in one direction from the rotary shaft (pivot shaft 42a) and engaging with the opening and closing of the air introduction port. Note that a door that includes two wall bodies extending from the pivot shaft in directions opposed to each other and engaging with the opening and closing of the air introduction port is called a "butterfly door" and different from the cantilever door.

The second switching door 43 is formed as a rotary door. The term "rotary door" denotes a door that has a curved wall body (43b) (a wall face engaging with the opening and closing of the air introduction port) located away from the rotary shaft (pivot shaft 43a).

Hereinbelow, in this specification, the first switching door 42 shall be referred to as the "cantilever door 42" and the second switching door 43 shall be referred to as the "rotary door 43".

In the second embodiment, the rotary door 43 itself as a whole has the shape of a fan-shaped cylinder. The rotary door 43 has: a pair of fan-shaped sidewalls (corresponding to bottom faces of a fan-shaped cylinder in a geometrical term) that is connected to the pivot shaft 43a; and a circumferential wall 43b (corresponding to a curved side face of three side faces of the fan-shaped cylinder in a geometrical term) that is connected to the sidewalls 43c. The rotary door 43 has no wall body in a portion corresponding to the two flat side faces of the fan-shaped cylinder in a geometrical term.

As can be understood from the description of the second embodiment described above, the rotary door 43 is provided so as to be capable of disconnecting at least the external air introduction port 25 from the first region 211, and the cantilever door 42 is provided so as to be capable of disconnecting at least the internal air introduction port 26A from the second region 212.

The rotary door 43 pivots about the first pivot shaft 43a so as to draw a pivot trajectory in the shape of a first fan-shaped cylinder 430. The center angle of each bottom face (bottom face in a geometrical term) of the first fan-shaped cylinder 430 is indicated by **θ**43 in Fig. 6A. The cantilever door 42 pivots about the second pivot shaft 42a, which extends parallel with the first pivot shaft 43a, so as to draw a pivot trajectory in the shape of a second fan-shaped cylinder 420. The center angle of each bottom face (bottom face in a geometrical term) of the second fan-shaped cylinder 420 is indicated by **θ**42 in Fig. 6A.

In this specification, the term "fan-shaped cylinder" denotes an upright cylindrical body that has fan-shaped bottom faces. Specifically, the fan-shaped cylinder has: two bottom faces in the shape of a fan (i.e. a figure surrounded by two radii of a circle and an arc between them) that are parallel with each other; two flat side faces (which are rectangular or square) ; and a curved side face (which has a shape corresponding to a part of the side face of a cylinder).

The first fan-shaped cylinder 430 formed by the rotary door 43 and the second fan-shaped cylinder 420 formed by the cantilever door 42 satisfy the following relationship 1 and relationship 2. (Relationship 1) One face 431 of the two flat side faces 431, 432 of the first fan-shaped cylinder 430 and one face 421 of the two flat side faces 421, 422 of the second fan-shaped cylinder 420 are located close to each other. (Relationship 2) The direction of the curve of the curved side face 433 of the first fan-shaped cylinder 430 at a first connection part 434 where the curved side face 433 of the first fan-shaped cylinder 430 and one flat side face 431 of the first fan-shaped cylinder 430 are connected and the direction of the curve of the curved side face 423 of the second fan-shaped cylinder 420 at a second connection part 424 where the curved side face 423 of the second fan-shaped cylinder 420 and one flat side face 421 of the second fan-shaped cylinder 420 are connected are opposite to each other.

The above relationship 1 in the second embodiment is described in more detail. The first and second fan-shaped cylinders satisfy the relationship that "one flat side face 431 of the first fan-shaped cylinder 430 and one flat side face 421 of the second fan-shaped cylinder 420 are located close to each other and opposed to each other with a (small) clearance between them". In this case, the first fan-shaped cylinder 430 and the second fan-shaped cylinder 420 are located away from each other.

By arranging the rotary door 43 and the cantilever door 42 so that the above relationship 1 and relationship 2 are satisfied, it is possible to reduce the space (hereinafter referred to as the "door installation space") needed to be secured in the air intake housing 21B to install the rotary door 43 and the cantilever door 42. Here, the door installation space can be understood to have the size of a space substantially proportional to the area of a region surrounded, as seen in the direction of the first pivot shaft 43a (or the second pivot shaft 42a), by the shortest closed line including one fan-shaped bottom face of the first fan-shaped cylinder 430 and one fan-shaped bottom face of the second fan-shaped cylinder 420.

It is preferable that the first fan-shaped cylinder 430 and the second fan-shaped cylinder 420 further satisfies the following relationship 3. (Relationship 3) The distance from the first connection part 434, at which the curved side face 433 of the first fan-shaped cylinder 430 and one flat side face 431 of the first fan-shaped cylinder 430 are connected, to the second pivot shaft 42a is shorter than the distance from the first connection part 434 to the second connection part 424, at which the curved side face 423 of the second fan-shaped cylinder 420 and one flat side face 421 of the second fan-shaped cylinder 420 are connected, and the distance from the second connection part 424 to the first pivot shaft 43a is shorter than the distance from the second connection part 424 to the first connection part 434.

To satisfy the above relationship 3 means that the side face 431 and the side face 421 overlap each other with a sufficiently large overlapping portion when seen in the direction of a normal to the side face 431 (or the side face 421). This makes it possible to further reduce the door installation space.

It is preferable that the first fan-shaped cylinder 430 and the second fan-shaped cylinder 420 further satisfies the following relationship. (Relationship 4) The first fan-shaped cylinder 430 is located in a region not lower than the first pivot shaft 43a, and the second fan-shaped cylinder 420 is located in a region not higher than the second pivot shaft 42a. By defining the pivot range of the first fan-shaped cylinder 430 and the second fan-shaped cylinder 420 in this manner, it is possible to further reduce the door installation space.

The relationship 4 can also be defined by the relationship with the air inflow face of the filter 35 (an upper face of the filter 35 in the illustrated embodiment) . In this case, the relationship 4 can be rewritten as follows. (Relationship 4') The first fan-shaped cylinder 430 is located in a region not closer to the air inflow face of the filter 35 than the first pivot shaft 43a, and the second fan-shaped cylinder 420 is located in a region not farther from the air inflow face of the filter 35 than the second pivot shaft 42a.

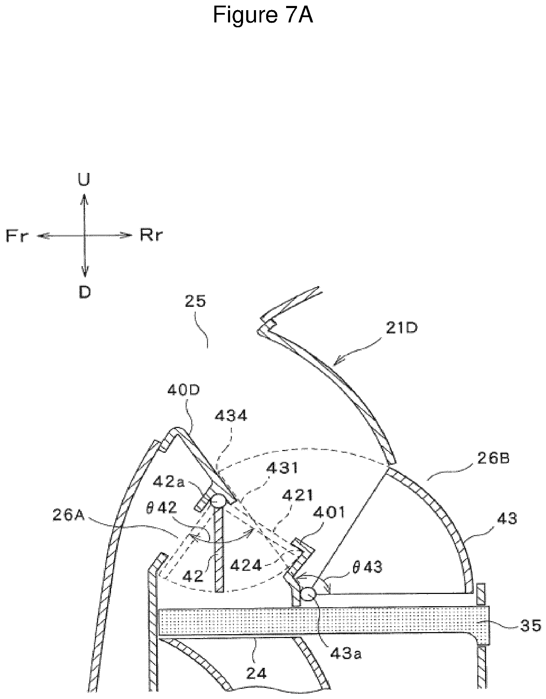

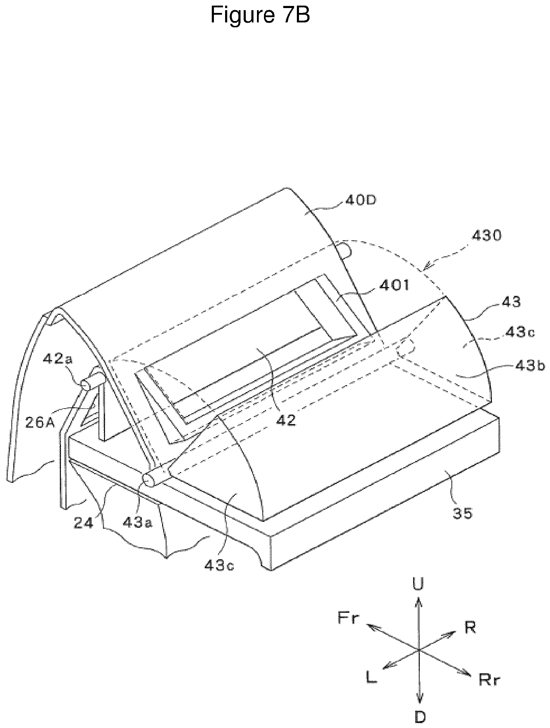

Figs. 7A and 7B illustrate a modification example of the second embodiment. In this modification example, one flat side face 431 of the first fan-shaped cylinder 430 is located close to one flat side face 421 of the second fan-shaped cylinder 420 (Relationship 1), and the first fan-shaped cylinder 430 and the second fan-shaped cylinder 420 partially overlap each other. The relationship 2 is the same as that in the second embodiment illustrated in Figs. 6A and 6B.

Specifically, in the modification example of Figs. 7A and 7B, the cantilever door 42 can pivot to such a position that the tip of the cantilever door 42 enters the inside of the first fan-shaped cylinder 430. As described previously, the rotary door 43 has no wall body in a portion corresponding to the two flat side faces of the fan-shaped cylinder in a geometrical term. Thus, as illustrated in Figs. 7A and 7B, a portion 401 of a housing division wall 40D of an air intake housing 21D can project into the first fan-shaped cylinder 43 which is the pivot trajectory of the rotary door 43. Note that the length of the portion 401 and the length of the cantilever door 42 measured in the direction in which the first and second pivot shafts 42a, 43a extend are shorter than the length of the first fan-shaped cylinder 43 i.e. the length of the circumferential wall 43b of the rotary door 43 measured in the same direction.

According to the first modification example of the second embodiment described above, it is possible to reduce the door installation space and help external air flow easily into the separation cylinder 14 in the external air mode.

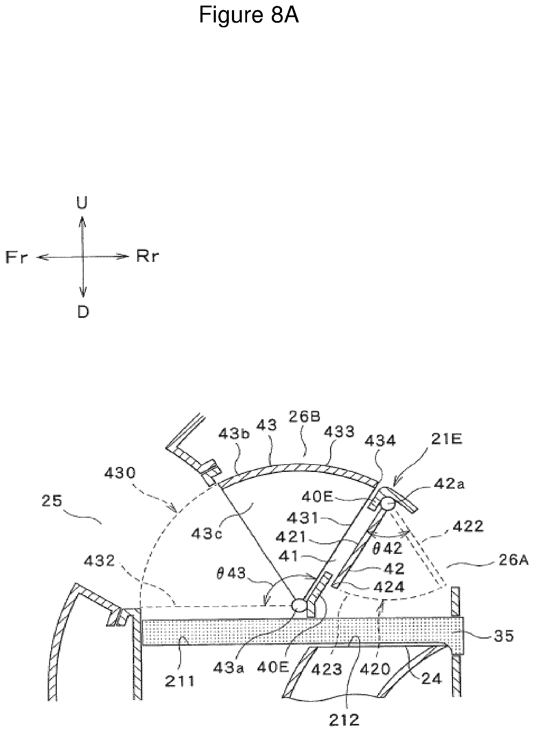

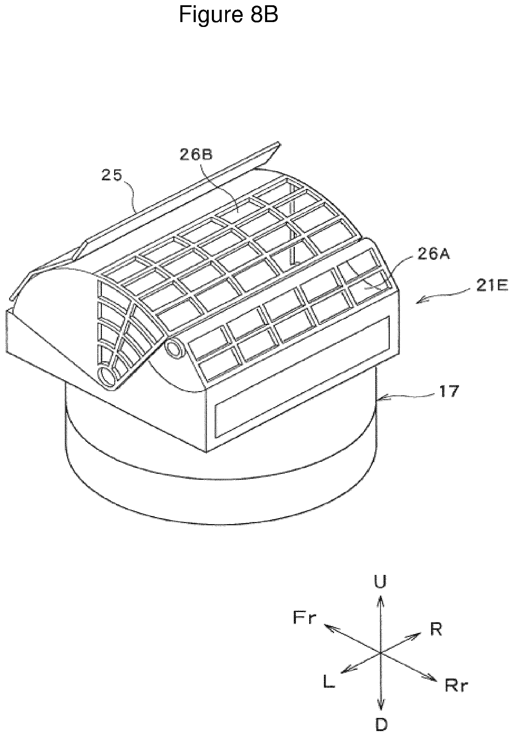

Next, a fourth embodiment is described with reference to Figs. 8A and 8B. In Figs. 8A and 8B, members which function the same as those of the second embodiment are assigned the same reference signs.

In the fourth embodiment, unlike the second embodiment, an air intake housing 21E is provided with the external air introduction port 25, the second internal air introduction port 26B, and the first internal air introduction port 26A in this order from the front. In the second embodiment, the upper end part 24 of the separation cylinder 14 is located below a rear part of the filter 35; on the other hand, in the fourth embodiment, it is located below the rear part of the filter 35.

In the fourth embodiment, when the centrifugal blower operates in the two-layer flow mode, as illustrated in Fig. 8A, the rotary door 43 opens the external air introduction port 25 and closes the second internal air introduction port 26B, and the cantilever door 42 closes the opening 41 of the housing division wall 40 and opens the first internal air introduction port 26A. In the internal air mode, the rotary door 43 closes the external air introduction port 25 and opens the second internal air introduction port 26B, and the cantilever door 42 closes the opening 41 of the housing division wall 40 and opens the first internal air introduction port 26A. In the external air mode, the rotary door 43 opens the external air introduction port 25 and closes the second internal air introduction port 26B, and the cantilever door 42 opens the opening 41 of the housing division wall 40 and closes the first internal air introduction port 26A.

In the fourth embodiment illustrated in Figs. 8A and 8B, the positional relationship in the longitudinal direction between the first fan-shaped cylinder 430 formed by the rotary door 43 and the second fan-shaped cylinder 420 formed by the cantilever door 42 is opposite to that in the second embodiment described above; however, the fourth embodiment also satisfies the relationship 1 to the relationship 4 described above as in the above second embodiment. Accordingly, the advantageous effects as in the second embodiment can also be achieved in the fourth embodiment illustrated in Fig. 8A.

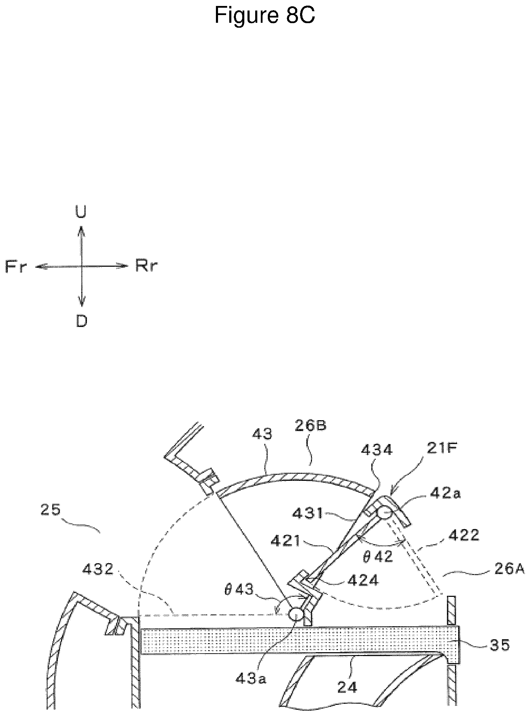

Meanwhile, in a modification example of the fourth embodiment illustrated in Fig. 8C, the positional relationship in the longitudinal direction between the first fan-shaped cylinder 430 formed by the rotary door 43 and the second fan-shaped cylinder 420 formed by the cantilever door 42 is opposite to that in the modification example of the second embodiment described above; however, this modification example also satisfies the relationship 1 to the relationship 4 described above as in the above modification example of the second embodiment. Accordingly, the advantageous effects as in the second embodiment can also be achieved in the modification example of the fourth embodiment illustrated in Fig. 8C.

### Reference Signs List

1: centrifugal blower, 2: impeller, 3: blade, 3A: circumferential blade row, Ax: rotational axis line, 13: motor, 14: separation cylinder, 14P: rear contour of separation cylinder, 16: lower part (outlet side end part) of separation cylinder, 17: scroll housing, 18: first airflow channel, 19: second airflow channel, 20: partition wall, 21A, 21B, 21C, 21D, 21E, 21F: air intake housing, 211: rear region (first region), 212: front region (second region), 22: suction port, 22e; circumferential edge, 24: upper end part (inlet side end part) of separation cylinder, 240: opening region, 25: external air introduction port, 26A, 26B: internal air introduction port, 26A: first internal air introduction port, 26B: second internal air introduction port, 35: filter, 40, 40D, 40E: housing division wall, 41: opening, 42: first switching door, 420: second fan-shaped cylinder, 43, 44: second switching door, 43g, 44g: air guiding face, DL: virtual division line, **θ**: oblique angle, G1: rear clearance, G2: front clearance, AE: external air, AR: internal air, T1: first passage (external air passage from external air introduction port to first region), T2: second passage (internal air passage from first internal air introduction port to second region), 43: rotary door, 43a: first pivot shaft, 430: first fan-shaped cylinder, 431, 432: flat side face of first fan-shaped cylinder, 433: curved side face of first fan-shaped cylinder, 434: first connection part, 42: cantilever door, 420: second fan-shaped cylinder, 421, 422: flat side face of second fan-shaped cylinder, 423: curved side face of second fan-shaped cylinder, 424: second connection part.

## Claims

1. A single-suction centrifugal blower (1) for a vehicle comprising:
a motor (13);
an impeller (2) that has a plurality of blades (3) which form circumferential blade rows (3A) and that is driven to rotate about a rotational axis line (Ax) by the motor to blow air, sucked inside a radially inside space of the blade rows (3A) from one end side in an axial direction thereof, out toward radially outside;
a scroll housing (17) that has an internal space which houses the impeller therein, a suction port (22) which opens on the one end side in the axial direction, and a discharge port (170) which opens in a circumferential direction thereof;
a partition wall (20) that divides a region of the inside space of the scroll housing (17), located between an inner circumferential face of the scroll housing (17) and an outer circumferential face of the impeller (2), and an internal space of the discharge port (170) in the axial direction to form a first airflow channel (18) and a second airflow channel (19);
a separation cylinder (14) that has an inlet side end part (24) which is located outside the scroll housing (17) and an outlet side end part (16) which is located radially inside the blade rows of the impeller (2), that extends from the inlet side end part (24) to the outlet side end part (16) through a radially inner side of the suction port (22), and that is designed to divide a flow of air, sucked into the scroll housing (17), into a first airflow to pass through the outside of the separation cylinder and a second airflow to pass through the inside of the separation cylinder and designed to cause the outlet side end part (16) to guide the first airflow to the first airflow channel (18) and guide the second airflow to the second airflow channel (19); and
an air intake housing (21A; 21C) that has an external air introduction port (25) and an internal air introduction port (26A; 26A, 26B) that has a first internal air introduction port (26A), the external and internal air being defined relative to a vehicle, wherein
when a cross section of the air intake housing (21A; 21C)
including the inlet side end part (24) of the separation cylinder is divided into a first region (211), which is located behind an opening region (240) surrounded by the inlet side end part (24), and a second region (212), which coincides with the opening region (240), by a virtual division line (DL), air having passed through the first region (211) flows into the scroll housing (17) through the outside of the separation cylinder (14) and the suction port (22) and air having passed through the second region (212) flows into the scroll housing (17) through the inside of the separation cylinder (14),
the first internal air introduction port is designed to introduce air into the air intake housing (21A; 21C) when the centrifugal blower operates in a two-layer flow mode, **characterized in that**
the external air introduction port (25) is located relatively to the first internal air introduction port (26A), distal to the scroll housing in the direction of the rotational axis line (Ax), and
when the centrifugal blower operates in the two-layer flow mode, a first air (AE) flows into the first region (211) through the external air introduction port (25) and a second air (AR) flows into the second region (212) through the first internal air introduction port (26A),
wherein the external air introduction port (25) and the first internal air introduction port (26A) both open toward the same direction,
wherein, when seen in a cross section, which is obtained by cutting the air intake housing (21A; 21C) along a vertical plane that extends in a longitudinal direction and passes through the rotational axis line when the blower is mounted on a vehicle, when the centrifugal blower operates in the two-layer flow mode, an airflow channel of first air (AE) extending from the external air introduction port (25) to the first region (211) extends obliquely downward and rearward, when the blower is mounted on a vehicle, as the airflow channel extends downstream, and extends above and behind, when the blower is mounted on a vehicle, an airflow channel of second air (AR) extending from the first internal air introduction port (26A) to the second region (212),
wherein a housing division wall (40) that is designed to separate the airflow channel of the first air (AE) and the airflow channel of the second air (AR) from each other when the centrifugal blower operates in the two-layer flow mode is provided inside the air intake housing (21A, 21C),
wherein
an opening (41) is formed in the housing division wall (40),
a first switching door (42) is provided in the air intake housing (21A; 21C), and
the first switching door is capable of switching a mode between: a first mode in which the external air introduction port (25) communicates with the second region (212) through the opening of the housing division wall and the first internal air introduction port (26A) does not communicate with the second region (212); and a second mode in which the first internal air introduction port (26A) communicates with the second region (212) and the external air introduction port (25) does not communicate with the second region (212).

2. The centrifugal blower according to claim 1, wherein an oblique angle (**θ**) of the airflow channel of the first air (AE), extending from the external air introduction port (25) to the first region (211), with respect to a horizontal plane increases toward the downstream.

3. The centrifugal blower according to claim 1 or 2, wherein, when seen in the cross section, which is obtained by cutting the air intake housing (21A; 21C) along the vertical plane that extends in the longitudinal direction and passes through the rotational axis line (Ax), a rear contour (14P) of the separation cylinder (14) extends so as to slope rearward toward the bottom.

4. The centrifugal blower according to any one of claims 1 to 3, wherein a rear clearance (G1) between a circumferential edge (22e) of the scroll housing, defining the suction port (22), and an outer circumferential face of the separation cylinder (14) inside the suction port (22) is larger than a front clearance (G2) therebetween.

5. The centrifugal blower according to any one of claims 1 to 4, wherein
the internal air introduction port further includes a second internal air introduction port (26B) that is designed to introduce air into the air intake housing (21C) when the centrifugal blower operates in an internal air mode,
a second switching door (44) is provided in the air intake housing (21B; 21C), and
the second switching door (44) is capable of switching a mode between: a first mode in which the external air introduction port (25) communicates with the first region (211) of the air intake housing and the said second internal air introduction port (26B) does not communicate with the first region (211); and a second mode in which the external air introduction port (25) does not communicate with the first region (211) of the air intake housing and the said second internal air introduction port (26B) communicates with the first region (211) .

6. The centrifugal blower according to claim 5, wherein, when seen in the cross section, which is obtained by cutting the air intake housing (21C) along the vertical plane that extends in the longitudinal direction and passes through the rotational axis line (Ax), the second switching door (44) has an air guiding face (44g) that curves to be convex upward and rearward.

7. The centrifugal blower according to any one of claims 1 to 6, wherein,
a filter (35) is provided near and above the inlet side end part (24) of the separation cylinder (14), and
when the filter (35) is seen from an upstream side in an airflow direction, the filter covers the first region (211) and the second region (212) to remove contaminants contained in air which are to pass through the first region and the second region.

8. A single-suction centrifugal blower (1) for a vehicle comprising:
a motor (13);
an impeller (2) that has a plurality of blades (3) which form circumferential blade rows (3A) and that is driven to rotate about a rotational axis line (Ax) by the motor to blow air, sucked inside a radially inside space of the blade rows (3A) from one end side in an axial direction thereof, out toward radially outside;
a scroll housing (17) that has an internal space which houses the impeller therein, a suction port (22) which opens on the one end side in the axial direction, and a discharge port (170) which opens in a circumferential direction thereof;
a partition wall (20) that divides a region of the inside space of the scroll housing (17), located between an inner circumferential face of the scroll housing (17) and an outer circumferential face of the impeller (2), and an internal space of the discharge port (170) in the axial direction to form a first airflow channel (18) and a second airflow channel (19);
a separation cylinder (14) that has an inlet side end part (24) which is located outside the scroll housing (17) and an outlet side end part (16) which is located radially inside the blade rows of the impeller (2), that extends from the inlet side end part (24) to the outlet side end part (16) through a radially inner side of the suction port (22), and that is designed to divide a flow of air, sucked into the scroll housing (17), into a first airflow to pass through the outside of the separation cylinder and a second airflow to pass through the inside of the separation cylinder and designed to cause the outlet side end part (16) to guide the first airflow to the first airflow channel (18) and guide the second airflow to the second airflow channel (19);
an air intake housing (21B, 21D) that has an external air introduction port (25) and an internal air introduction port (26A, 26B) that has a first internal air introduction port (26A), the external and internal air being defined relative to a vehicle,
**characterized in that** the external air introduction port (25) is located above the internal air introduction port (26A); and wherein
a rotary door (43) and a cantilever door (42) are provided in the air intake housing (21B, 21D), wherein a cross section of the air intake housing (21B, 21D) including the inlet side end part (24) of the separation cylinder (14) is divided into a first region (211), which is other than an opening region (240) surrounded by the inlet side end part (24), and a second region (212), which coincides with the opening region (240), by the inlet side end part (24),
air having passed through the first region (211) flows into the scroll housing (17) through the outside of the separation cylinder (14) and the suction port (22) and air having passed through the second region (212) flows into the scroll housing (17) through the inside of the separation cylinder (14),
the rotary door (43) is provided so as to be capable of disconnecting at least the external air introduction port (25) from the first region (211), and the cantilever door (42) is provided so as to be capable of disconnecting at least the first internal air introduction port (26A) from the second region (212),
the rotary door (43) pivots about a first pivot shaft (43a) so as to draw a pivot trajectory in the shape of a first fan-shaped cylinder (430), and the cantilever door (42) pivots about a second pivot shaft (42a), which extends parallel with the first pivot shaft (43a), so as to draw a pivot trajectory in the shape of a second fan-shaped cylinder (420), and
the rotary door (43) and the cantilever door (42) are arranged so that: one face (431) of two flat side faces (431, 432) of the first fan-shaped cylinder (430) and one face (421) of two flat side faces (421, 422) of the second fan-shaped cylinder (420) are located close to each other; and a direction of a curve of a curved side face (433) of the first fan-shaped cylinder (430) at a first connection part (434) where the curved side face (433) of the first fan-shaped cylinder (430) and the one flat side face (431) of the first fan-shaped cylinder (430) are connected and a direction of a curve of a curved side face (423) of the second fan-shaped cylinder (420) at a second connection part (424) where the curved side face (423) of the second fan-shaped cylinder (420) and the one flat side face (421) of the second fan-shaped cylinder (420) are connected are opposite to each other,
wherein the external air introduction port (25) and the first internal air introduction port (26A) both open toward the same direction,
wherein a housing division wall (40) is provided inside the air intake housing (21B, 21D), the housing division wall (40) being designed to separate from each other, a first passage (T1), which connects the external air introduction port (25) and the rear region (211) to each other, and a second passage (T2), which connects the internal air introduction port (26A) and the front region (212) to each other,
wherein an opening (41) is formed in the housing division wall (40),
wherein the cantilever door (42) is movable between: a first position where the cantilever door (42) opens the first internal air introduction port (26A) and closes the opening (41) of the housing division wall (40); and a second position where the cantilever door (42) closes the first internal air introduction port (26A) and opens the opening (41) of the housing division wall (40
wherein, when the centrifugal blower operates in the two-layer flow mode, the cantilever door (42) is located at the first position while the rotary door (43) is located at the first position.

9. The centrifugal blower according to claim 8, wherein the one flat side face (431) of the first fan-shaped cylinder and the one flat side face (421) of the second fan-shaped cylinder are opposed to each other with a clearance therebetween.

10. The centrifugal blower according to claim 8, wherein the first fan-shaped cylinder (430) and the second fan-shaped cylinder (420) partially overlap each other.

11. The centrifugal blower according to any one of claims 8 to 10, wherein a distance from the first connection part (434) to the second pivot shaft (42a) is shorter than a distance from the first connection part (434) to the second connection part (424), and a distance from the second connection part (424) to the first pivot shaft (43a) is shorter than a distance from the second connection part (424) to the first connection part (434) .

12. The centrifugal blower according to any one of claims 8 to 11, wherein the first fan-shaped cylinder (430) is located in a region not lower than the first pivot shaft (43a), and the second fan-shaped cylinder (420) is located in a region not higher than the second pivot shaft (42a).

## Patentansprüche

1. Einzelsaug-Zentrifugalgebläse (1) für ein Fahrzeug, umfassend:
einen Motor (13),
ein Laufrad (2), das eine Vielzahl von Schaufeln (3) aufweist, die umlaufende Schaufelreihen (3A) bilden, und das durch den Motor zum Drehen um eine Drehachsenlinie (Ax) angetrieben wird, um Luft, die innerhalb eines radial innen liegenden Raums der Schaufelreihen (3A) angesaugt wird, von einer Endseite in einer axialen Richtung davon nach radial außen zu blasen;
ein Spiralgehäuse (17), das einen Innenraum aufweist, der das Laufrad darin aufnimmt, einen Sauganschluss (22), der an der einen Endseite in axialer Richtung geöffnet ist, und einen Auslassanschluss (170), der in einer Umfangsrichtung davon geöffnet ist;
eine Trennwand (20), die einen Bereich des Innenraums des Spiralgehäuses (17), der sich zwischen einer inneren Umfangsfläche des Spiralgehäuses (17) und einer äußeren Umfangsfläche des Laufrads (2) befindet, und einen Innenraum des Auslassanschlusses (170) in axialer Richtung unterteilt, um einen ersten Luftstromkanal (18) und einen zweiten Luftstromkanal (19) zu bilden;
einen Trennzylinder (14), der ein einlassseitiges Endteil (24), das außerhalb des Spiralgehäuses (17) angeordnet ist, und ein auslassseitiges Endteil (16) aufweist, das radial innerhalb der Schaufelreihen des Laufrads (2) angeordnet ist, das sich vom einlassseitigen Endteil (24) zum auslassseitigen Endteil (16) über eine radial innere Seite des Sauganschlusses (22) erstreckt, und das dazu ausgelegt ist, einen Luftstrom, der in das Spiralgehäuse (17) gesaugt wird, in einen ersten Luftstrom, der durch die Außenseite des Trennzylinders strömt, und einen zweiten Luftstrom, der durch die Innenseite des Trennzylinders strömt, aufzuteilen, und dazu ausgelegt ist, das auslassseitige Endteil (16) zu veranlassen, den ersten Luftstrom zum ersten Luftstromkanal (18) zu leiten und den zweiten Luftstrom zum zweiten Luftstromkanal (19) zu leiten; und
ein Luftansauggehäuse (21A; 21C), das einen Außenlufteinleitungsanschluss (25) und einen Innenlufteinleitungsanschluss (26A; 26A, 26B) mit einem ersten Innenlufteinleitungsanschluss (26A) aufweist, wobei die Außenluft und Innenluft in Bezug auf ein Fahrzeug definiert sind, wobei
wenn ein Querschnitt des Luftansauggehäuses (21A; 21C), der den einlassseitigen Endteil (24) des Trennzylinders enthält, durch eine virtuelle Trennlinie (DL) in einen ersten Bereich (211), der sich hinter einem durch den einlassseitigen Endteil (24) umgebenen Öffnungsbereich (240) befindet, und einen zweiten Bereich (212), der mit dem Öffnungsbereich (240) zusammenfällt, unterteilt wird, über den ersten Bereich (211) einströmende Luft über die Außenseite des Trennzylinders (14) und den Sauganschluss (22) in das Spiralgehäuse (17) strömt und über den zweiten Bereich (212) einströmende Luft über die Innenseite des Trennzylinders (14) in das Spiralgehäuse (17) strömt,
der erste Innenlufteinleitungsanschluss dazu ausgelegt ist, Luft in das Luftansauggehäuse (21A; 21C) einzuleiten, wenn das Zentrifugalgebläse in einem Zweischichtstrommodus arbeitet, **dadurch gekennzeichnet, dass** sich der Außenlufteinleitungsanschluss (25) relativ zum ersten Innenlufteinleitungsanschluss (26A) fern vom Spiralgehäuse in Richtung der Drehachse (Ax) gelegen befindet, und
wenn das Zentrifugalgebläse im Zweischichtstrommodus arbeitet, eine erste Luft (AE) über den Außenlufteinleitungsanschluss (25) in den ersten Bereich (211) strömt und eine zweite Luft (AR) über den ersten Innenlufteinleitungsanschluss (26A) in den zweiten Bereich (212) strömt,
wobei der Außenlufteinleitungsanschluss (25) und der erste Innenlufteinleitungsanschluss (26A) beide in dieselbe Richtung geöffnet sind,
wobei, in einem Querschnitt gesehen, der durch Schneiden des Luftansauggehäuses (21A; 21C) entlang einer vertikalen Ebene erhalten wird, die sich in einer Längsrichtung erstreckt und durch die Linie der Drehachse verläuft, wenn das Gebläse an einem Fahrzeug befestigt ist, wenn das Zentrifugalgebläse im Zweischichtstrommodus arbeitet, ein Luftstromkanal der ersten Luft (AE), der sich aus dem Außenlufteinleitungsanschluss (25) zum ersten Bereich (211) erstreckt, schräg nach unten und nach hinten verläuft, wenn das Gebläse an einem Fahrzeug befestigt ist, während sich der Luftstromkanal stromabwärts erstreckt und sich oberhalb und dahinter erstreckt, wenn das Gebläse an einem Fahrzeug befestigt ist, sich ein Luftstromkanal der zweiten Luft (AR) vom ersten Innenlufteinleitungsanschluss (26A) zum zweiten Bereich (212) erstreckt,
wobei innerhalb des Luftansauggehäuses (21A, 21C) eine Gehäuseteilungswand (40) vorgesehen ist, die dazu ausgelegt ist, den Luftstromkanal der ersten Luft (AE) und den Luftstromkanal der zweiten Luft (AR) voneinander zu trennen, wenn das Zentrifugalgebläse im Zweischichtstrommodus arbeitet, wobei
eine Öffnung (41) in der Gehäuseteilungswand (40) ausgebildet ist,
im Luftansauggehäuse (21A; 21C) eine erste Schalttür (42) vorgesehen ist, und
die erste Schalttür in der Lage ist, einen Modus umzuschalten zwischen: einem ersten Modus, in dem der Außenlufteinleitungsanschluss (25) mit dem zweiten Bereich (212) über die Öffnung der Gehäuseteilungswand kommuniziert und der erste Innenlufteinleitungsanschluss (26A) nicht mit dem zweiten Bereich (212) kommuniziert; und einem zweiten Modus, in dem der erste Innenlufteinleitungsanschluss (26A) mit dem zweiten Bereich (212) kommuniziert und der Außenlufteinleitungsanschluss (25) nicht mit dem zweiten Bereich (212) kommuniziert.

2. Zentrifugalgebläse gemäß Anspruch 1, wobei ein schräger Winkel (θ) des Luftstromkanals der ersten Luft (AE), der sich aus dem Außenlufteinleitungsanschluss (25) in den ersten Bereich (211) erstreckt, in Bezug auf eine horizontale Ebene stromabwärts zunimmt.

3. Zentrifugalgebläse gemäß Anspruch 1 oder 2, wobei im Querschnitt gesehen, der durch Schneiden des Luftansauggehäuses (21A; 21C) entlang der sich in Längsrichtung erstreckenden und durch die Drehachsenlinie (Ax) verlaufenden vertikalen Ebene erhalten wird, eine hintere Kontur (14P) des Trennzylinders (14) so verläuft, dass sie nach hinten zum Boden hin abfällt.

4. Zentrifugalgebläse gemäß einem der Ansprüche 1 bis 3, wobei ein hinterer Abstand (G1) zwischen einer Umfangskante (22e) des Spiralgehäuses, die den Sauganschluss (22) definiert, und einer äußeren Umfangsfläche des Trennzylinders (14) innerhalb des Sauganschlusses (22) größer als ein vorderer Abstand (G2) dazwischen ist.

5. Zentrifugalgebläse gemäß einem der Ansprüche 1 bis 4, wobei
der Innenlufteinleitungsanschluss ferner einen zweiten Innenlufteinleitungsanschluss (26B) enthält, der dazu ausgelegt ist, Luft in das Luftansauggehäuse (21C) einzuleiten, wenn das Zentrifugalgebläse in einem Innenluftmodus betrieben wird,
im Luftansauggehäuse (21B; 21C) eine zweite Schalttür (44) vorgesehen ist, und
die zweite Schalttür (44) in der Lage ist, einen Modus umzuschalten zwischen: einem ersten Modus, in dem der Außenlufteinleitungsanschluss (25) mit dem ersten Bereich (211) des Luftansauggehäuses kommuniziert und der zweite Innenlufteinleitungsanschluss (26B) nicht mit dem ersten Bereich (211) kommuniziert; und einem zweiten Modus, in dem der Außenlufteinleitungsanschluss (25) nicht mit dem ersten Bereich (211) des Luftansauggehäuses kommuniziert und der zweite Innenlufteinleitungsanschluss (26B) mit dem ersten Bereich (211) kommuniziert.

6. Zentrifugalgebläse gemäß Anspruch 5, wobei die zweite Schalttür (44) im Querschnitt gesehen, der durch Schneiden des Luftansauggehäuses (21C) entlang der sich in Längsrichtung erstreckenden und durch die Drehachsenlinie (Ax) verlaufenden vertikalen Ebene erhalten wird, eine nach oben und hinten konvex gekrümmte Luftleitfläche (44g) aufweist.

7. Zentrifugalgebläse gemäß einem der Ansprüche 1 bis 6, wobei
ein Filter (35) in der Nähe und oberhalb des einlassseitigen Endteils (24) des Trennzylinders (14) vorgesehen ist, und
wenn der Filter (35) von einer stromaufwärts gelegenen Seite in einer Luftstromrichtung gesehen wird, der Filter den ersten Bereich (211) und den zweiten Bereich (212) abdeckt, um in der Luft enthaltene Verunreinigungen zu entfernen, die durch den ersten Bereich und den zweiten Bereich hindurchgehen sollen.

8. Einzelsaug-Zentrifugalgebläse (1) für ein Fahrzeug, umfassend:
einen Motor (13),
ein Laufrad (2), das eine Vielzahl von Schaufeln (3) aufweist, die umlaufende Schaufelreihen (3A) bilden, und das durch den Motor zum Drehen um eine Drehachsenlinie (Ax) angetrieben wird, um Luft, die innerhalb eines radial innen liegenden Raums der Schaufelreihen (3A) angesaugt wird, von einer Endseite in einer axialen Richtung davon nach radial außen zu blasen;
ein Spiralgehäuse (17), das einen Innenraum aufweist, der das Laufrad darin aufnimmt, einen Sauganschluss (22), der an der einen Endseite in axialer Richtung geöffnet ist, und einen Auslassanschluss (170), der in einer Umfangsrichtung davon geöffnet ist;
eine Trennwand (20), die einen Bereich des Innenraums des Spiralgehäuses (17), der sich zwischen einer inneren Umfangsfläche des Spiralgehäuses (17) und einer äußeren Umfangsfläche des Laufrads (2) befindet, und einen Innenraum des Auslassanschlusses (170) in axialer Richtung unterteilt, um einen ersten Luftstromkanal (18) und einen zweiten Luftstromkanal (19) zu bilden;
einen Trennzylinder (14), der einen einlassseitigen Endteil (24), der außerhalb des Spiralgehäuses (17) angeordnet ist, und einen auslassseitigen Endteil (16) aufweist, der radial innerhalb der Schaufelreihen des Laufrads (2) angeordnet ist, das sich vom einlassseitigen Endteil (24) zum auslassseitigen Endteil (16) durch eine radial innere Seite des Sauganschlusses (22) erstreckt, und das dazu ausgelegt ist, einen Luftstrom, der in das Spiralgehäuse (17) gesaugt wird, in einen ersten Luftstrom, der durch die Außenseite des Trennzylinders strömt, und einen zweiten Luftstrom, der durch die Innenseite des Trennzylinders strömt, aufzuteilen, und dazu ausgelegt ist, den auslassseitigen Endteil (16) zu veranlassen, den ersten Luftstrom zum ersten Luftstromkanal (18) zu leiten und den zweiten Luftstrom zum zweiten Luftstromkanal (19) zu leiten;
ein Luftansauggehäuse (21B; 21D), das einen Außenlufteinleitungsanschluss (25) und einen Innenlufteinleitungsanschluss (26A, 26B) mit einem ersten Innenlufteinleitungsanschluss (26A) aufweist, wobei die Außenluft und Innenluft in Bezug auf ein Fahrzeug definiert sind, **dadurch gekennzeichnet, dass** der Außenlufteinleitungsanschluss (25) oberhalb des Innenlufteinleitungsanschlusses (26A) angeordnet ist; und wobei
eine Drehtür (43) und eine Kragarmtür (42) in dem Luftansauggehäuse (21B, 21D) vorgesehen sind, wobei
ein Querschnitt des Luftansauggehäuses (21B, 21D), der den einlassseitigen Endteil (24) des Trennzylinders (14) enthält, durch den einlassseitigen Endteil (24) in einen ersten Bereich (211), der von einem Öffnungsbereich (240) verschieden ist, der durch den einlassseitigen Endteil (24) umgeben ist, und einen zweiten Bereich (212), der mit dem Öffnungsbereich (240) zusammenfällt, unterteilt ist,
Luft, die den ersten Bereich (211) durchströmt hat, über die Außenseite des Trennzylinders (14) und den Sauganschluss (22) in das Spiralgehäuse (17) strömt und Luft, die den zweiten Bereich (212) durchströmt hat, über die Innenseite des Trennzylinders (14) in das Spiralgehäuse (17) strömt,
die Drehtür (43) dazu vorgesehen ist, mindestens den Außenlufteinleitungsanschluss (25) vom ersten Bereich (211) zu trennen, und die Kragarmtür (42) dazu vorgesehen ist, mindestens den ersten Innenlufteinleitungsanschluss (26A) vom zweiten Bereich (212) zu trennen,
die Drehtür (43) um eine erste Schwenkachse (43a) schwenkt, sodass sie eine Schwenkbahn in Form eines ersten fächerförmigen Zylinders (430) beschreibt,und die Kragarmtür (42) um eine zweite Schwenkachse (42a) schwenkt, die sich parallel zur ersten Schwenkachse (43a) erstreckt, sodass sie eine Schwenkbahn in Form eines zweiten fächerförmigen Zylinders (420) beschreibt, und
die Drehtür (43) und die Kragarmtür (42) so angeordnet sind, dass: eine Fläche (431) von zwei ebenen Seitenflächen (431, 432) des ersten fächerförmigen Zylinders (430) und eine Fläche (421) von zwei ebenen Seitenflächen (421, 422) des zweiten fächerförmigen Zylinders (420) nahe beieinander angeordnet sind; und eine Richtung einer Kurve einer gekrümmten Seitenfläche (433) des ersten fächerförmigen Zylinders (430) an einem ersten Verbindungsteil (434), an dem die gekrümmte Seitenfläche (433) des ersten fächerförmigen Zylinders (430) und die eine ebene Seitenfläche (431) des ersten fächerförmigen Zylinders (430) verbunden sind, und eine Richtung einer Krümmung einer gekrümmten Seitenfläche (423) des zweiten fächerförmigen Zylinders (420) an einem zweiten Verbindungsteil (424), an dem die gekrümmte Seitenfläche (423) des zweiten fächerförmigen Zylinders (420) und die eine ebene Seitenfläche (421) des zweiten fächerförmigen Zylinders (420) verbunden sind, entgegengesetzt zueinander sind,
wobei der Außenlufteinleitungsanschluss (25) und der erste Innenlufteinleitungsanschluss (26A) beide in dieselbe Richtung geöffnet sind,
wobei eine Gehäuseteilungswand (40) innerhalb des Luftansauggehäuses (21B, 21D) vorgesehen ist, wobei die Gehäuseteilungswand (40) dazu ausgelegt ist, einen ersten Durchgang (T1), der den Außenlufteinleitungsanschluss (25) und den hinteren Bereich (211) miteinander verbindet, und einen zweiten Durchgang (T2), der den Innenlufteinleitungsanschluss (26A) und den vorderen Bereich (212) miteinander verbindet, voneinander zu trennen,
wobei in der Gehäuseteilungswand (40) eine Öffnung (41) ausgebildet ist,
wobei die Kragarmtür (42) bewegbar ist zwischen: einer ersten Position, in der die Kragarmtür (42) den ersten Innenlufteinleitungsanschluss (26A) öffnet und die Öffnung (41) der Gehäuseteilungswand (40) schließt; und einer zweiten Position, in der die Kragarmtür (42) den ersten Innenlufteinleitungsanschluss (26A) schließt und die Öffnung (41) der Gehäuseteilungswand (40) öffnet,
wobei, wenn das Zentrifugalgebläse im Zweischichtstrommodus arbeitet, sich die Kragarmtür (42) an der ersten Position befindet, während sich die Drehtür (43) an der ersten Position befindet.

9. Zentrifugalgebläse gemäß Anspruch 8, wobei die eine ebene Seitenfläche (431) des ersten fächerförmigen Zylinders und die eine ebene Seitenfläche (421) des zweiten fächerförmigen Zylinders einander mit einem Abstand dazwischen gegenüberliegen.

10. Zentrifugalgebläse gemäß Anspruch 8, wobei sich der erste fächerförmige Zylinder (430) und der zweite fächerförmige Zylinder (420) teilweise überlappen.

11. Zentrifugalgebläse gemäß einem der Ansprüche 8 bis 10, wobei ein Abstand vom ersten Verbindungsteil (434) zur zweiten Drehwelle (42a) kürzer als ein Abstand vom ersten Verbindungsteil (434) zum zweiten Verbindungsteil (424) ist, und ein Abstand vom zweiten Verbindungsteil (424) zur ersten Drehwelle (43a) kürzer als ein Abstand vom zweiten Verbindungsteil (424) zum ersten Verbindungsteil (434) ist.

12. Zentrifugalgebläse gemäß einem der Ansprüche 8 bis 11, wobei der erste fächerförmige Zylinder (430) in einem Bereich angeordnet ist, der nicht niedriger als die erste Drehwelle (43a) ist, und der zweite fächerförmige Zylinder (420) in einem Bereich angeordnet ist, der nicht höher als die zweite Drehwelle (42a) ist.

## Revendications

1. Ventilateur centrifuge à aspiration simple (1) pour un véhicule comprenant :
un moteur (13) ;
une roue (2) qui a une pluralité de pales (3) qui forment des rangées de pales circonférentielles (3A) et qui est entraînée pour tourner autour d'une ligne d'axe de rotation (Ax) par le moteur pour souffler de l'air, aspiré à l'intérieur d'un espace radialement intérieur des rangées de pales (3A) à partir d'un côté d'extrémité dans une direction axiale de celles-ci, vers l'extérieur radialement ;
un carter de volute (17) qui a un espace interne qui abrite la roue en son sein, un orifice d'aspiration (22) qui s'ouvre sur le côté d'extrémité dans la direction axiale, et un orifice d'évacuation (170) qui s'ouvre dans une direction circonférentielle de celui-ci ;
une paroi de séparation (20) qui divise une région de l'espace intérieur du carter de volute (17), située entre une face circonférentielle interne du carter de volute (17) et une face circonférentielle externe de la roue (2), et un espace interne de l'orifice d'évacuation (170) dans la direction axiale pour former un premier canal d'écoulement d'air (18) et un second canal d'écoulement d'air (19) ;
un cylindre de séparation (14) qui a une partie d'extrémité côté entrée (24) qui est située à l'extérieur du carter de volute (17) et une partie d'extrémité côté sortie (16) qui est située radialement à l'intérieur des rangées de pales de la roue (2), qui s'étend de la partie d'extrémité côté entrée (24) à la partie d'extrémité côté sortie (16) à travers un côté radialement interne de l'orifice d'aspiration (22), et qui est conçu pour diviser un écoulement d'air, aspiré dans le carter de volute (17), en un premier écoulement d'air destiné à traverser l'extérieur du cylindre de séparation et un second écoulement d'air destiné à traverser l'intérieur du cylindre de séparation et conçu pour amener la partie d'extrémité côté sortie (16) à guider le premier écoulement d'air vers le premier canal d'écoulement d'air (18) et guider le second écoulement d'air vers le second canal d'écoulement d'air (19) ; et
un boîtier d'admission d'air (21A ; 21C) qui a un orifice d'introduction d'air externe (25) et un orifice d'introduction d'air interne (26A ; 26A, 26B) qui a un premier orifice d'introduction d'air interne (26A), l'air externe et interne étant défini par rapport à un véhicule, dans lequel
lorsqu'une section transversale du boîtier d'admission d'air (21A ; 21C) incluant la partie d'extrémité côté entrée (24) du cylindre de séparation est divisée en une première région (211), qui est située derrière une région d'ouverture (240) entourée par la partie d'extrémité côté entrée (24), et une seconde région (212), qui coïncide avec la région d'ouverture (240), par une ligne de division virtuelle (DL), de l'air ayant traversé la première région (211) s'écoule dans le carter de volute (17) à travers l'extérieur du cylindre de séparation (14) et l'orifice d'aspiration (22) et de l'air ayant traversé la seconde région (212) s'écoule dans le carter de volute (17) à travers l'intérieur du cylindre de séparation (14),
le premier orifice d'introduction d'air interne est conçu pour introduire de l'air dans le boîtier d'admission d'air (21A ; 21C) lorsque le ventilateur centrifuge fonctionne dans un mode d'écoulement à deux couches, **caractérisé en ce que** l'orifice d'introduction d'air externe (25) est situé par rapport au premier orifice d'introduction d'air interne (26A), de manière distale par rapport au carter de volute dans la direction de la ligne d'axe de rotation (Ax), et
lorsque le ventilateur centrifuge fonctionne dans le mode d'écoulement à deux couches, un premier air (AE) s'écoule dans la première région (211) à travers l'orifice d'introduction d'air externe (25) et un second air (AR) s'écoule dans la seconde région (212) à travers le premier orifice d'introduction d'air interne (26A),
dans lequel l'orifice d'introduction d'air externe (25) et le premier orifice d'introduction d'air interne (26A) s'ouvrent tous les deux vers la même direction,
dans lequel, vu dans une section transversale, qui est obtenue en coupant le boîtier d'admission d'air (21A ; 21C) le long d'un plan vertical qui s'étend dans une direction longitudinale et traverse la ligne d'axe de rotation lorsque le ventilateur est monté sur un véhicule, lorsque le ventilateur centrifuge fonctionne dans le mode d'écoulement à deux couches, un canal d'écoulement d'air de premier air (AE) s'étendant de l'orifice d'introduction d'air externe (25) à la première région (211) s'étend obliquement vers le bas et vers l'arrière, lorsque le ventilateur est monté sur un véhicule, lorsque le canal d'écoulement d'air s'étend en aval, et s'étend au-dessus et derrière, lorsque le ventilateur est monté sur un véhicule, un canal d'écoulement d'air de second air (AR) s'étendant du premier orifice d'introduction d'air interne (26A) à la seconde région (212),
dans lequel une paroi de séparation de boîtier (40) qui est conçue pour séparer le canal d'écoulement d'air du premier air (AE) et le canal d'écoulement d'air du second air (AR) l'un de l'autre lorsque le ventilateur centrifuge fonctionne dans le mode d'écoulement à deux couches est fournie à l'intérieur du boîtier d'admission d'air (21A, 21C), dans lequel
une ouverture (41) est formée dans la paroi de séparation de boîtier (40),
une première porte de commutation (42) est fournie dans le boîtier d'admission d'air (21A ; 21C), et
la première porte de commutation est capable de commuter un mode entre : un premier mode dans lequel l'orifice d'introduction d'air externe (25) communique avec la seconde région (212) à travers l'ouverture de la paroi de séparation de boîtier et le premier orifice d'introduction d'air interne (26A) ne communique pas avec la seconde région (212) ; et un second mode dans lequel le premier orifice d'introduction d'air interne (26A) communique avec la seconde région (212) et l'orifice d'introduction d'air externe (25) ne communique pas avec la seconde région (212).

2. Ventilateur centrifuge selon la revendication 1, dans lequel un angle oblique (θ) du canal d'écoulement d'air du premier air (AE), s'étendant de l'orifice d'introduction d'air externe (25) à la première région (211), par rapport à un plan horizontal diminue vers l'aval.

3. Ventilateur centrifuge selon la revendication 1 ou 2, dans lequel, vu dans la section transversale, qui est obtenue en coupant le boîtier d'admission d'air (21A ; 21C) le long du plan vertical qui s'étend dans la direction longitudinale et traverse la ligne d'axe de rotation (Ax), un contour arrière (14P) du cylindre de séparation (14) s'étend de manière à s'incliner vers l'arrière vers le fond.

4. Ventilateur centrifuge selon l'une quelconque des revendications 1 à 3, dans lequel un jeu arrière (G1) entre un bord circonférentiel (22e) du carter de volute, définissant l'orifice d'aspiration (22), et une face circonférentielle externe du cylindre de séparation (14) à l'intérieur de l'orifice d'aspiration (22) est plus grand qu'un jeu avant (G2) entre eux.

5. Ventilateur centrifuge selon l'une quelconque des revendications 1 à 4, dans lequel
l'orifice d'introduction d'air interne inclut un second orifice d'introduction d'air interne (26B) qui est conçu pour introduire de l'air dans le boîtier d'admission d'air (21C) lorsque le ventilateur centrifuge fonctionne dans un mode d'air interne,
une seconde porte de commutation (44) est fournie dans le boîtier d'admission d'air (21B ; 21C), et
la seconde porte de commutation (44) est capable de commuter un mode entre : un premier mode dans lequel l'orifice d'introduction d'air externe (25) communique avec la première région (211) du boîtier d'admission d'air et ledit second orifice d'introduction d'air interne (26B) ne communique pas avec la première région (211) ; et un second mode dans lequel l'orifice d'introduction d'air externe (25) ne communique pas avec la première région (211) du boîtier d'admission d'air et ledit second orifice d'introduction d'air interne (26B) communique avec la première région (211).

6. Ventilateur centrifuge selon la revendication 5, dans lequel, vue dans la section transversale, qui est obtenue en coupant le boîtier d'admission d'air (21C) le long du plan vertical qui s'étend dans la direction longitudinale et traverse la ligne d'axe de rotation (Ax), la seconde porte de commutation (44) a une face de guidage d'air (44g) qui s'incurve pour être convexe vers le haut et vers l'arrière.

7. Ventilateur centrifuge selon l'une quelconque des revendications 1 à 6, dans lequel,
un filtre (35) est fourni près et au-dessus de la partie d'extrémité côté entrée (24) du cylindre de séparation (14), et
lorsque le filtre (35) est vu depuis un côté en amont dans une direction d'écoulement d'air, le filtre couvre la première région (211) et la seconde région (212) pour éliminer des contaminants contenus dans l'air qui doivent traverser la première région et la seconde région.

8. Ventilateur centrifuge à aspiration simple (1) pour un véhicule comprenant :
un moteur (13) ;
une roue (2) qui a une pluralité de pales (3) qui forment des rangées de pales circonférentielles (3A) et qui est entraînée pour tourner autour d'une ligne d'axe de rotation (Ax) par le moteur pour souffler de l'air, aspiré à l'intérieur d'un espace radialement intérieur des rangées de pales (3A) à partir d'un côté d'extrémité dans une direction axiale de celles-ci, vers l'extérieur radialement ;
un carter de volute (17) qui a un espace interne qui abrite la roue en son sein, un orifice d'aspiration (22) qui s'ouvre sur le côté d'extrémité dans la direction axiale, et un orifice d'évacuation (170) qui s'ouvre dans une direction circonférentielle de celui-ci ;
une paroi de séparation (20) qui divise une région de l'espace intérieur du carter de volute (17), située entre une face circonférentielle interne du carter de volute (17) et une face circonférentielle externe de la roue (2), et un espace interne de l'orifice d'évacuation (170) dans la direction axiale pour former un premier canal d'écoulement d'air (18) et un second canal d'écoulement d'air (19) ;
un cylindre de séparation (14) qui a une partie d'extrémité côté entrée (24) qui est située à l'extérieur du carter de volute (17) et une partie d'extrémité côté sortie (16) qui est située radialement à l'intérieur des rangées de pales de la roue (2), qui s'étend de la partie d'extrémité côté entrée (24) à la partie d'extrémité côté sortie (16) à travers un côté radialement interne de l'orifice d'aspiration (22), et qui est conçu pour diviser un écoulement d'air, aspiré dans le carter de volute (17), en un premier écoulement d'air destiné à traverser l'extérieur du cylindre de séparation et un second écoulement d'air destiné à traverser l'intérieur du cylindre de séparation et conçu pour amener la partie d'extrémité côté sortie (16) à guider le premier écoulement d'air vers le premier canal d'écoulement d'air (18) et guider le second écoulement d'air vers le second canal d'écoulement d'air (19) ;
un boîtier d'admission d'air (21B, 21D) qui a un orifice d'introduction d'air externe (25) et un orifice d'introduction d'air interne (26A, 26B) qui a un premier orifice d'introduction d'air interne (26A), l'air externe et interne étant défini par rapport à un véhicule, **caractérisé en ce que** l'orifice d'introduction d'air externe (25) est situé au-dessus de l'orifice d'introduction d'air interne (26A) ; et dans lequel
une porte rotative (43) et une porte en porte-à-faux (42) sont fournies dans le boîtier d'admission d'air (21B, 21D), dans lequel
une section transversale du boîtier d'admission d'air (21B, 21D) incluant la partie d'extrémité côté entrée (24) du cylindre de séparation (14) est divisée en une première région (211), qui est autre qu'une région d'ouverture (240) entourée par la partie d'extrémité côté entrée (24), et une seconde région (212), qui coïncide avec la région d'ouverture (240), par la partie d'extrémité côté entrée (24),
de l'air ayant traversé la première région (211) s'écoule dans le carter de volute (17) à travers l'extérieur du cylindre de séparation (14) et l'orifice d'aspiration (22) et de l'air ayant traversé la seconde région (212) s'écoule dans le carter de volute (17) à travers l'intérieur du cylindre de séparation (14),
la porte rotative (43) est fournie de manière à pouvoir déconnecter au moins l'orifice d'introduction d'air externe (25) de la première région (211), et la porte en porte-à-faux (42) est fournie de manière à pouvoir déconnecter au moins le premier orifice d'introduction d'air interne (26A) de la seconde région (212),
la porte rotative (43) pivote autour d'un premier arbre de pivotement (43a) de manière à dessiner une trajectoire de pivotement de la forme d'un premier cylindre en forme d'éventail (430), et la porte en porte-à-faux (42) pivote autour d'un second arbre de pivotement (42a), qui s'étend parallèlement au premier arbre de pivotement (43a), de manière à dessiner une trajectoire de pivotement de la forme d'un second cylindre en forme d'éventail (420), et la porte rotative (43) et la porte en porte-à-faux (42) sont agencées de sorte que : une face (431) de deux faces latérales plates (431, 432) du premier cylindre en forme d'éventail (430) et une face (421) de deux faces latérales plates (421, 422) du second cylindre en forme d'éventail (420) sont situées à proximité l'une de l'autre ; et une direction d'une courbe d'une face latérale incurvée (433) du premier cylindre en forme d'éventail (430) au niveau d'une première partie de connexion (434) où la face latérale incurvée (433) du premier cylindre en forme d'éventail (430) et la face latérale plate (431) du premier cylindre en forme d'éventail (430) sont reliées et une direction d'une courbe d'une face latérale incurvée (423) du second cylindre en forme d'éventail (420) au niveau d'une seconde partie de connexion (424) où la face latérale incurvée (423) du second cylindre en forme d'éventail (420) et la face latérale plate (421) du second cylindre en forme d'éventail (420) sont connectées sont opposées l'une à l'autre,
dans lequel l'orifice d'introduction d'air externe (25) et le premier orifice d'introduction d'air interne (26A) s'ouvrent tous les deux vers la même direction,
une paroi de séparation de boîtier (40) est fournie à l'intérieur du boîtier d'admission d'air (21B, 21D), la paroi de séparation de boîtier (40) étant conçue pour séparer l'un de l'autre, un premier passage(T1), qui connecte l'orifice d'introduction d'air externe (25) et la région arrière (211) l'un à l'autre, et un second passage (T2), qui connecte l'orifice d'introduction d'air interne (26A) et la région avant (212) l'un à l'autre,
dans lequel une ouverture (41) est formée dans la paroi de séparation de boîtier (40),
dans lequel la porte en porte-à-faux (42) est mobile entre : une première position où la porte en porte-à-faux (42) ouvre le premier orifice d'introduction d'air interne (26A) et ferme l'ouverture (41) de la paroi de séparation de boîtier (40) ; et une seconde position où la porte en porte-à-faux (42) ferme le premier orifice d'introduction d'air interne (26A) et ouvre l'ouverture (41) de la paroi de séparation de boîtier (40),
dans lequel, lorsque le ventilateur centrifuge fonctionne dans le mode d'écoulement à deux couches, la porte en porte-à-faux (42) est située dans la première position lorsque la porte rotative (43) est située dans la première position.

9. Ventilateur centrifuge selon la revendication 8, dans lequel la face latérale plate (431) du premier cylindre en forme d'éventail et la face latérale plate (421) du second cylindre en forme d'éventail sont opposées l'une à l'autre avec un jeu entre elles.

10. Ventilateur centrifuge selon la revendication 8, dans lequel le premier cylindre en forme d'éventail (430) et le second cylindre en forme d'éventail (420) se chevauchent partiellement l'un l'autre.

11. Ventilateur centrifuge selon l'une quelconque des revendications 8 à 10, dans lequel une distance de la première partie de connexion (434) au second arbre de pivotement (42a) est plus courte qu'une distance de la première partie de connexion (434) à la seconde partie de connexion (424), et une distance de la seconde partie de connexion (424) au premier arbre de pivotement (43a) est plus courte qu'une distance de la seconde partie de connexion (424) à la première partie de connexion (434).

12. Ventilateur centrifuge selon l'une quelconque des revendications 8 à 11, dans laquelle le premier cylindre en forme d'éventail (430) est situé dans une région qui n'est pas inférieure au premier arbre de pivotement (43a), et le second cylindre en forme d'éventail (420) est situé dans une région qui n'est pas supérieure au second arbre de pivotement (42a).
